# EUROPÄISCHE PATENTSCHRIFT

(11) **EP 0 795 387 B1**
(45) Veröffentlichungstag und Bekanntmachung des Hinweises auf die Patenterteilung: **28.06.2000**
(21) Anmeldenummer: 97103518.3
(22) Anmeldetag: 04.03.1997
(51) Int. Cl.: B29C 45/67, F16J 7/00

(54) **Einrichtung zum Spritzgiessen von Kunststoff**
Apparatus for injection moulding of plastic materials
Dispositif de moulage par injection de matières plastiques

(30) Priorität: 14.03.1996 AT 14096 U
(43) Veröffentlichungstag der Anmeldung: 17.09.1997
(73) Patentinhaber: Engel Maschinenbau Gesellschaft m.b.H., A-4311 Schwertberg (AT)
(72) Erfinder: Urbanek, Otto, 4320 Linz (AT)
(74) Vertreter: Hofinger, Engelbert, Dr.Dr.

(56) Entgegenhaltungen:
- DE-A- 4 308 701
- FR-A- 2 522 083
- GB-A- 278 528
- PATENT ABSTRACTS OF JAPAN vol. 10, no. 307 (M-527), 18.Oktober 1986 & JP 61 119874 A (HITACHI CONSTR MACH CO LTD), 7.Juni 1986,
- PATENT ABSTRACTS OF JAPAN vol. 13, no. 521 (M-896), 21.November 1989 & JP 01 210662 A (FUARUKON), 24.August 1989,

## Beschreibung

Die Erfindung bezieht sich auf eine Einrichtung zum Spritzgießen von Kunststoff in eine aus zwei Formhälften gebildete Form, wobei eine Formhälfte auf einer bewegbaren Formaufspannplatte angeordnet ist und die den Schließdruck auf diese Formaufspannplatte aufbringende Kolbenstange an der Bewegung der Formaufspannplatte teilnimmt und dabei mit ihrer Außenseite an der inneren Dichtung eines feststehenden Zylinderrohres gleitet (vgl. US-A 5,332,385).

Eine derartige Einrichtung ist konstruktiv sehr einfach, hat aber den Nachteil, daß mit zunehmender Größe der Maschine auch die üblicherweise als Tauchkolben ausgebildete Kolbenstange eine erhebliche Größe erreicht. Bei einem Schließdruck beispielsweise von 1,5 MN beträgt der Durchmesser der Kolbenstange etwa 300 mm, ihre Länge etwa 1.000 mm.

Als Ausgangsmaterial für die Kolbenstangen werden heute durchwegs geschmiedete Vollzylinder verwendet, welche durch spanabhebende Bearbeitung in ihre endgültige Form gebracht werden. Dabei beschränkt man sich darauf, in der Kolbenstange jene Bohrungen anzubringen, welche für die Funktion der Einrichtung notwendig sind, insbesondere also einen Hohlraum für die zum Auswerfen der Formteile dienende Auswerfeinrichtung. Wegen der hohen Kosten verzichtet man auf die Möglichkeit, aus Festigkeitsgründen nicht benötigtes Material abzuarbeiten, und bewegt so beim Betrieb der Spritzießmaschine unnötig große Massen.

In bezug auf die Materialqualität sind wegen der Reibung an der Dichtung besondere Anforderungen gegeben. Mit größeren Durchmessern steigt aber die Gefahr von nichtmetallischen Einschlüssen, Schlackenbildung, Walzfehlern und Schmiedefehlern. Das bedeutet, daß zu einem sehr späten Zeitpunkt des Fertigungsprozesses, nämlich dann, wenn die Oberfläche in den Endzustand versetzt wird, Fehler auftreten können, die für die Einsatztauglichkeit von Bedeutung sind, wodurch die bereits aufgewendete Arbeit verloren ist.

Trotz der aufgezeigten Nachteile der Verwendung geschmiedeter Vollzylinder als Ausgangsmaterial hat man bisher davon abgesehen, die Kolbenstangen des Schließzylinders von Spritzgießmaschinen in einem Gießverfahren und damit - abgesehen von einer oberflächlichen Bearbeitung - in der endgültigen Form herzustellen. Der Grund dafür lag darin, daß Gußstahl bzw. -eisen nicht durch oberflächliche Wärmebehandlung wie Induktivhärten oder Flammhärten bzw. durch Nitrieren so weit vergütet werden kann, wie dies die geschilderte Art des Einsatzes verlangt. Durch Nitrieren würde eine solche Kolbenstange nicht die notwendige Härte erhalten. Diese wäre zwar durch Flammhärten zu erzielen, doch läßt sich in diesem Fall die Oberflächenrauhigkeit nicht weit genug senken.

Aufgabe der Erfindung ist es demgegenüber, eine Kolbenstange mit besseren funktionellen Eigenschaften zu entwickeln. Dabei geht man von der Überlegung aus, daß die primäre Funktion der Kolbenstange darin besteht, einen Hydraulikzylinder nach außen hin dicht zumachen und die eingeleitete Axialkraft zu übertragen. Die zu bewegende Masse soll möglichst gering sein. Die Lauffläche des Kolbens soll eine Oberfläche aufweisen, welche die Abdichtung des Systems auch nach längerer Verschleißbeanspruchung sicherstellt.

Die Erfindung ermöglicht die Lösung dieser Aufgabe dadurch, daß die aus einer Legierung auf Eisenbasis - abgesehen von oberflächlicher Bearbeitung - in endgültiger Form gegossene Kolbenstange in dem mit der Dichtung des Zylinderrohres in Berührung kommenden Bereich mit einem harten Überzug aus einem anderen Material versehen ist.

Die Herstellung der Kolbenstange in einem Gießverfahren ermöglicht es, die Form der Kolbenstange so zu gestalten, daß beim Betrieb der Einrichtung kein überflüssiges Material bewegt werden muß. Das zur Aufnahme der von außen einwirkenden Kräfte nicht benötigte Material wird von vornherein weggelassen. Da eine als Tauchkolben ausgeführte Kolbenstange für die Schließeinrichtung einer Spritzgießmaschine im wesentlichen auf Druck beansprucht wird und gießbare Eisenlegierungen sich durch gute Druckfestigkeit auszeichnen, bedeutet dies, daß ein wesentlicher Teil des Volumens der Kolbenstange ausgespart werden kann. In ihrer optimalen Form stellt sich die Kolbenstange als durch eine Querwand unterteiltes Rohr aus Sphäroguß dar.

Das Problem bei der Verwendung gegossener Kolbenstangen liegt darin, daß die Lauffläche der Kolbenstange, welche mit der Dichtung des Zylinderrohres in Berührung kommt, in Betrieb periodisch ins Freie gelangt und dort einer gewissen Verschmutzungsgefahr ausgesetzt ist. Dies wiederum bedingt eine relativ robuste Ausführung der Dichtungen und letztlich hohe Anforderungen hinsichtlich Härte und Vermeidung Rauhigkeit für die Lauffläche der Kolbenstange. Daß diesen Anforderungen bei einem Gußteil Genüge getan werden kann, war durchaus überraschend, zumal eine bloße Verbesserung des Gefüges im oberflächennahen Bereich zwar als mögliche, aber letztlich doch nicht ganz befriedigende Lösung ausschied. Die Lösung brachte erste die im Rahmen der anschließenden Figurenbeschreibung im Detail zu schildende Aufbringung eines Überzuges in Form einer in einem thermischen Spritzverfahren aufgebrachten hartmetallischen oder keramischen Funktionsschicht.

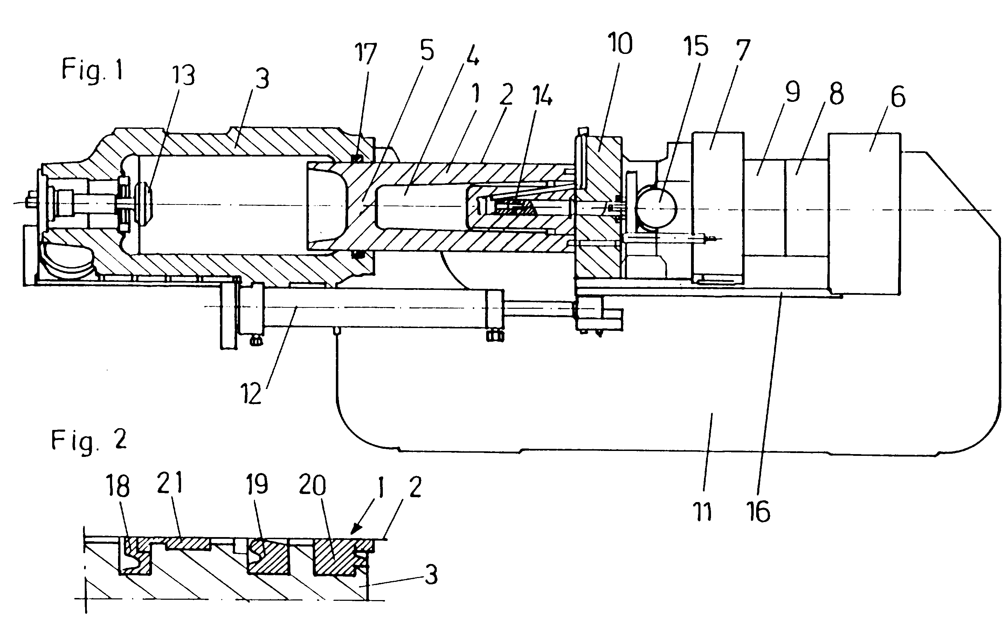

In der Zeichnung stellt Fig. 1 einen Längsschnitt durch die Schließseite einer mit der erfindungsgemäßen Kolbenstange ausgestatteten Spritzgießeinrichtung dar. Fig. 2 zeigt einen vergrößerten Ausschnitt durch den Berührungsbereich zwischen dem Überzug der Kolbenstange und der Dichtung des Zylinderrohres.

Die in Fig. 1 dargestellte Schließseite einer Spritzgießeinrichtung besteht im wesentlichen aus einem Rahmen 11, mit dem eine Formaufspannplatte 6 fest verbunden ist, wogegen eine weitere Formaufspannplatte 7 auf Schienen 16 verfahrbar ist, um die aus den Formhälften 8, 9 bestehende Form öffnen und schließen bzw. zusammenpressen zu können. Das Öffnen und Schließen der Form erfolgt mittels paarweise angeordneter Hydrozylinder 12. Der Schließdruck auf die geschlossene Form wird hingegen durch einen Hydrozylinder ausgeübt, dessen wesentliche Teile das Zylinderrohr 3 und die Kolbenstange 1 sind.

Wenn die Form geschlossen, also in die in der Fig. 1 dargestellte Position verfahren wird, wird in den Innenraum des Zylinderrohres 3 über das Ventil 13 Hydraulikflüssigkeit in großer Menge nachgesaugt. Anschließend wird im Innenraum des Zylinder

rohres 3 der Schließdruck aufgebaut, welcher über die Kolbenstange 1 und die Auswerferplatte 10 auf die bewegbare Formaufspannplatte 7 und damit auf die Form übertragen wird. Da es sich bei der dargestellten Einrichtung um eine holmlose Maschine handelt, befindet sich zwischen Auswerferplatte 10 und Formaufspannplatte 7 ein Gelenk 15.

Wesentlich für die Erfindung ist, daß die Kolbenstange 1 aus einer gegossenen Fisenlegierung, beispielsweise aus Sphäroguß GGG 70 oder GGG 50, besteht und mit einer Verschleißschutzschicht überzogen ist, um der an der Dichtung 17 entstehenden Reibung auf Dauer standzuhalten. Diese Ausbildung ermöglicht es, die Kolbenstange 1 mit einem Hohlraum 4 zu versehen, welcher größer dimensioniert werden kann als es zur Aufnahme der Auswerfereinrichtung 14 notwendig wäre.

In Fig. 2 ist der Berührungsbereich zwischen Zylinderrohr 3 und Kolbenstange 1 dargestellt. Man sieht hier, daß die in Fig. 1 global mit 17 bezeichnete Dichtung aus einer Primärdichtung 18 besteht, welche dem hohen Schließdruck standhalten muß, und aus einer Sekundärdichtung 19, welche Leckverluste verhindern soll. Vorgeschaltet ist diesen beiden Dichtelementen ein Schmutzabstreifer 20. Um metallischen Kontakt zwischen der Kolbenstange 1 und dem Zylinderrohr 3 mit Sicherheit zu verhindern, sind außerdem in Umfangsrichtung unterbrochene Führungsstreifen 21 vorgesehen, welche die Verschleißfestigkeit der Oberfläche der Kolbenstange 1 stark beanspruchen. Aus diesem Grunde ist die Kolbenstange 1 mit dem erfindungsgemäßen Überzug 2 versehen, welcher beispielsweise aus Hartmetall bestehen kann. In diesem Fall empfiehlt sich die Aufbringung durch sogenanntes Hochgeschwindigkeitsflamm-spritzen. Dabei werden kleine Teilchen aus Metallcarbid, insbesondere Wolframcarbid, mit mehrfacher Schall-Geschwindigkeit auf die Oberfläche der Kolbenstange geschleudert und verbinden sich mechanisch mit dieser. Das Aufbringen keramischer Metalloxide, beispielsweise CrO, erfolgt hingegen besser bei hohen Temperaturen in einem Plasmabeschichtungsverfahren. Der Grundkörper wird in beiden Fällen beim Beschichtungsvorgang nicht aufgeschmolzen, die Oberflächeneigenschaften werden vollständig durch den Beschichtungswerkstoff bestimmt. Die Dicke der entsprechenden Schicht liegt vorzugsweise zwischen 0,1 und 0,4 mm, was ein Nachschleifen der erzielten Oberfläche erlaubt.

Um eine besonders glatte Oberfläche zu erzielen, ist es vorteilhaft, vor dem Aufbringen des Überzugs den Gußteil zu schruppen und - insbesondere mittels Ultraschall - sorgfältig zu reinigen.

## Patentansprüche

1. Einrichtung zum Spritzgießen von Kunststoff in eine aus zwei Formhälften (8,9) gebildete Form, wobei eine Formhälfte (9) auf einer bewegbaren Formaufspannplatte (7) angeordnet ist und die den Schließdruck auf diese Formaufspannplatte (7) aufbringende Kolbenstange (1) an der Bewegung der Formaufspannplatte (7) teilnimmt und dabei mit ihrer Außenseite an der inneren Dichtung (17) eines feststehenden Zylinderrohres (3) gleitet, dadurch gekennzeichnet, daß die aus einer Legierung auf Eisenbasis - abgesehen von oberflächlicher Bearbeitung - in endgültiger Form gegossene Kolbenstange (1) in dem mit der Dichtung (17) des Zylinderrohres (3) in Berührung kommenden Bereich mit einem harten Überzug (2) aus einem anderen Material versehen ist.

2. Einrichtung nach Anspruch 1, dadurch gekennzeichnet, daß der Überzug (2) der Kolbenstange (1) aus einem vorzugsweise aufgespritzten Hartmetall besteht.

3. Einrichtung nach Anspruch 1, dadurch gekennzeichnet, daß der Überzug (2) überwiegend aus Wolframcarbid besteht.

4. Einrichtung nach Anspruch 1, dadurch gekennzeichnet, daß der Überzug (2) aus einem vorzugsweise im Plasmaverfahren aufgebrachten keramischen Werkstoff besteht.

5. Einrichtung nach Anspruch 4, dadurch gekennzeichnet, daß der Überzug (2) aus Chromoxid oder Aluminiumoxid/Zirkonoxid besteht.

6. Einrichtung nach einem der vorhergehenden Ansprüche 1 bis 5, dadurch gekennzeichnet, daß der Überzug (2) eine Dicke von 0,1 bis 0,4 mm aufweist.

7. Einrichtung nach einem der Ansprüche 1 bis 6, dadurch gekennzeichnet, daß die Kolbenstange (1) aus Sphäroguß besteht.

8. Einrichtung nach einem der Ansprüche 1 bis 7, dadurch gekennzeichnet, daß die Kolbenstange (1) als Tauchkolben ausgebildet ist.

9. Einrichtung nach einem der Ansprüche 1 bis 8, dadurch gekennzeichnet, daß die Kolbenstange (1) als durch eine Querwand (5) unterteiltes Rohr ausgebildet ist.

## Claims

1. Apparatus for the injection molding of plastic material into a mold formed from two mold halves (8, 9), wherein one mold half (9) is arranged on a movable mold mounting plate (7) and the piston rod (1) applying the closing pressure to that mold mounting plate (7) takes part in the movement of the mold mounting plate (7) and in so doing slides with its outside against the inner seal (17) of a stationary cylinder tube (3), characterised in that the piston rod (1) which is cast from an iron-base alloy in definitive form - apart from surface machining - is provided in the region which comes into contact with the seal (17) of the cylinder tube (3) with a hard coating (2) of another material.

2. Apparatus as set forth in claim 1 characterised in that the coating (2) of the piston rod (1) comprises a hard metal which is preferably sprayed on.

3. Apparatus as set forth in claim 1 characterised in that the coating (2) predominantly comprises tungsten carbide.

4. Apparatus as set forth in claim 1 characterised in that the coating (2) comprises a ceramic material which is preferably applied by a plasma process.

5. Apparatus as set forth in claim 4 characterised in that the coating (2) comprises chromium oxide or aluminium oxide/zirconium oxide.

6. Apparatus as set forth in one of preceding claims 1 through 5 characterised in that the coating (2) is of a thickness of 0.1 to 0.4 mm.

7. Apparatus as set forth in one of claims 1 through 6 characterised in that the piston rod (1) comprises spheroidal graphite iron.

8. Apparatus as set forth in one of claims 1 through 7 characterised in that the piston rod (1) is in the form of a plunger piston.

9. Apparatus as set forth in one of claims 1 through 8 characterised in that the piston rod (1) is in the form of a tube subdivided by a transverse wall (5).

## Revendications

1. Dispositif de moulage par injection de matières plastiques dans un moule formé de deux demi-moules (8,9), un demi-moule (9) étant disposé sur une plaque de fixation de moule mobile (7) et la tige de piston (1) qui applique la pression de fermeture sur cette plaque de fixation de moule (7) participant au mouvement de la plaque de fixation de moule (7) en coulissant de ce fait avec son coté extérieur sur le joint intérieur (17) d'un tube de cylindre fixe (3), caractérisé en ce que la tige de piston (1) moulée dans sa forme définitive dans un alliage à base de fer - à l'exception du traitement de surface - est munie dans la zone rentrant en contact avec le joint (17) du tube de cylindre (3) d'un revêtement dur (2) en un matériau différent.

2. Dispositif selon la revendication 1, caractérisé en ce que le revêtement (2) de la tige de piston (1) se compose d'un métal dur appliqué de préférence par projection.

3. Dispositif selon la revendication 1, caractérisé en ce que le revêtement (2) se compose principalement de carbure de tungstène.

4. Dispositif selon la revendication 1, caractérisé en ce que le revêtement (2) se compose d'un matériau en céramique appliqué de préférence par un procédé au plasma.

5. Dispositif selon la revendication 4, caractérisé en ce que le revêtement (2) se compose d'oxyde de chrome ou d'oxyde d'aluminium/zircone.

6. Dispositif selon l'une des revendications précédentes 1 à 5, caractérisé en ce que le revêtement (2) a une épaisseur entre 0,1 et 0,4 mm.

7. Dispositif selon l'une des revendications 1 à 6, caractérisé en ce que la tige de piston (1) se compose de fonte sphérolitique.

8. Dispositif selon l'une des revendications 1 à 7, caractérisé en ce que la tige de piston (1) est réalisée en tant que piston plongeur.

9. Dispositif selon l'une des revendications 1 à 8, caractérisé en ce que la tige de piston (1) est réalisée en tant que tube divisé par une paroi transversale (5).
